# DEMANDE DE BREVET EUROPEEN

(11) **EP 0 651 956 A1**
(43) Date de publication de la demande: **10.05.1995**
(21) Numéro de dépôt: 94402528.7
(22) Date de dépôt: 08.11.1994
(51) Int. Cl.: A47B 47/04, A47B 87/02, F16B 12/14

(54) **Mobilier en kit et ses dispositifs d'assemblage et de montage**

(30) Priorité: 08.11.1993 FR 9313390
(71) Demandeur: Beaux, Dominique, F-75004 Paris (FR)
(72) Inventeur: Beaux, Dominique, F-75004 Paris (FR)

(57) **Abrégé**

L'invention concerne un mobilier en kit à base de composants d'ossature modulaire en bois, agrandissable à volonté, recevant à volonté tablettes, côtés et fonds, dont l'assemblage et le montage sont aisés et les modes de fabrication particulièrement économiques.

La douille écrou (1) retenant les vissages des organes de rappel solidaires des extrémités des traverses principales est introduite à la fabrication par l'orifice (2) de même diamètre percé horizontalement à toute hauteur voulue du montant et à l'endroit d'application d'une des dites traverses. Elle y est maintenue prisonnière par un goupillage interne transversal à la douille écrou. Ce goupillage est obtenu d'une part et dans le sens longitudinal du montant -soit au moyen de deux goupilles (3) préalablement introduites dans l'orifice (4) transversal à la douille, puis chassées latéralement sous l'effet de coin d'une tige métallique (5) à tête biseautée introduite dans le taraudage (6) de la douille, ainsi ancrées à l'intérieur du montant - soit au moyen d'une tige filetée (7) introduite par un perçage longitudinal débouchant en bout du montant à son extrémité et vissée dans l'orifice (4) taraudé à cet effet. Ce goupillage est obtenu d'autre part et dans le sens transversal au montant par une goupille aux extrémités taraudées accessibles aux vissages des dites vis de rappel et ainsi bloquée par une vis pointeau vissée dans le taraudage de la douille écrou..

Le mobilier selon l'invention couvre tous les programmes d'ameublement modulaires en pièces détachées, d'encombrement minimal tant pour leur stockage que leur transport.

## Description

L'invention concerne un mobilier en kit à base de composants d'ossature modulaire en bois, agrandissable ou démontable sans restrictions, recevant à volonté tablettes, côtés et fonds dont les assemblages et le montage sont particulièrement aisés et la fabrication économique.

On connaît plusieurs systèmes de mobilier en kit (en particulier celui décrit dans le brevet n° 8811916) qui comprennent pour l'essentiel :
1/ une ossature primaire à base de modules parallélépipédiques, agrandissable à volonté en hauteur et latéralement, composée d'une pluralité de montants (M) et de traverses longitudinales (TL) et transversales (TT), de préférence en bois, le pied de chaque montant supérieur (MS) étant d'une part assemblé à volonté sur le dessus du montant inférieur et, d'autre part, chaque extrémité des traverses étant serrée en appui contre la paroi latérale du montant correspondant au moyen d'une vis de rappel, maintenue en tête dans l'extrémité de la traverse par l'intermédiaire d'une douille spéciale, et assemblée par vissage dans une douille métallique écrou, elle même maintenue à l'intérieur du montant et taraudée selon deux directions orthogonales transversales et coaxiales aux vis de rappel,
2/ une pluralité de traverses intermédiaires longitudinales (TIL) et transversales (TIT) posées à hauteur voulue sur des taquets amovibles enfoncés dans des orifices percés à cet effet dans les parois des montants,
3/ une pluralité de panneaux minces, horizontaux d'une part et posés en tablettes sur les bords intérieurs, feuillurés à cet effet, des cadres horizontaux des traverses, et verticaux d'autre part et placés et maintenus dans les cadres de côté et de fond de l'ossature primaire.

Toutefois la technique du brevet submentionné présente plusieurs inconvénients rédhibitoires, entre autres pour un mobilier devant être monté par son acheteur. En particulier, la compréhension de l'ordre de montage est rendue difficile, et sa durée excessive, du fait que la grosse douille écrou doit être introduite par l'usager dans l'extrémité du montant ; de plus, le trou percé à l'extrémité supérieure des montants, lorsqu'il est apparent, est particulièrement inesthétique. En outre, le fait de devoir visser le pied du montant supérieur sur le dessus du montant inférieur contribue à augmenter excessivement la durée du montage, surtout lorsque le mobilier est de dimensions importantes. Par ailleurs, en ce qui concerne la fabrication, le fait que les tenonnages d'extrémité soient différents pour la TL, la TT et la TIL rallonge considérablement les temps d'usinage et augmente par suite le coût de la fabrication, ce qui rend le produit insuffisamment compétitif. Il convient de mentionner encore plusieurs inconvénients importants : 1/ l'absence de toute TIT qui devrait soutenir la tranche latérale des tablettes minces et en constituer une bordure à la fois fonctionnelle et esthétique; 2/ l'inutilité de la rainure longitudinale à la face interne de tous les montants, pourtant très apparente visuellement, et ne servant en réalité qu'à l'accès du tournevis pour visser et assembler le pied des montants supérieurs de l'ossature et rendant l'assemblage de côtés minces nécessaire à en justifier sa fonction, alors que ce ne devrait être qu'une option ; 3/ enfin l'impossibilité d'introduire dans les cadres transversaux et longitudinaux de l'ossature des panneaux de côté et de fond plus épais que l'épaisseur même de cette rainure longitudinale à la sous-face des TL, alors que des panneaux aussi minces manquent de rigidité.

Le mobilier en kit et ses dispositifs d'assemblage et de montage, mais également de fabrication, apportent selon l'invention des solutions radicales à tous ces problèmes inhérents à la technique antérieure.

En effet, la première solution apportée par l'invention est que la douille écrou est introduite dans le montant, et ce lors de la fabrication, de manière à réduire la durée de l'opération de montage par l'usager et à la rendre plus simple et plus intelligible. A cet effet, la douille écrou est introduite étroitement et par simple enfoncement dans un orifice de même diamètre percé contre la paroi du montant et du côté de l'assemblage de la TT ; elle est de plus maintenue définitivement en cette position par un goupillage transversal à la douille, soit dans le sens horizontal transversal au montant dans une première version, soit dans le sens vertical dans une deuxième version. De plus, en raison même de son introduction latérale, celle-ci a lieu à toute hauteur désirée du montant; elle est de surcroît dissimulée entre la paroi d'introduction et l'application de l'extrémité de la TT.

Trois modes de goupillage transversal de la douille écrou font l'objet de l'invention:
1/ selon une première solution, le goupillage est obtenu dans le sens horizontal transversal au montant par une goupille cylindrique étroitement introduite par le perçage transversal au montant ainsi que par le perçage coaxial au précédent et transversal à la douille écrou. Cette goupille présente deux caractéristiques : d'une part elle est percée et taraudée à chacune de ses extrémités au diamètre et pas de la vis de rappel d'assemblage des TL, d'autre part elle est maintenue dans la douille écrou par le vissage d'une vis pointeau courte dans le taraudage longitudinal de ladite douille écrou jusqu'au blocage de la tête pointeau en appui dans le fond d'une gorge annulaire en profil en V correspondant à la pointe de la vis pointeau, gorge facilement usinée par décolletage et située dans le plan transversal de symétrie de ladite goupille. Dans ce mode de réalisation préférentiel, tant la douille écrou que la goupille ont une longueur maximum possible et seulement un peu inférieure à l'épaisseur transversale du montant de manière à rapprocher au maximum l'accessibilité des taraudages aux vis de rappel.
2/ selon une deuxième solution, ce goupillage est obtenu par deux goupilles de longueur chacune égale à la moitié du diamètre de la douille écrou, introduites dans un orifice transversal à celle-ci et perpendiculaire à ses deux taraudages dito et en leur intersection, et ce préalablement à l'introduction de ladite goupille dans le montant puis chassées latéralement sous l'effet de coin soit d'une tige à tête biseautée, tel un tournevis plat, soit encore d'une vis pointeau introduite et vissée dans le taraudage longitudinal de la douille écrou ; l'enfoncement d'ancrage interne de chaque goupille à l'extérieur et de part et d'autre de la douille écrou et dans le corps même du montant est égal à la moitié du diamètre d'orifice d'introduction du coin ; des goupilles tubulaires, avec bordure d'extrémité tranchante, telles des goupilles dites 'mécanandus', sont particulièrement appropriées à ce goupillage grâce à leur aptitude à pénétrer facilement dans la masse du bois du montant.
3/ selon une troisième solution et si la douille se trouve à proximité d'une des extrémités du montant, son goupillage est obtenu au moyen d'une tige filetée introduite à travers un perçage longitudinal débouchant en bout du montant, puis vissée dans la douille écrou, le perçage transversal vertical est taraudé à cet effet.

Dans ce troisième mode de goupillage, l'invention résout facilement l'assemblage du pied du montant supérieur sur le dessus du montant inférieur comme suit : une douille métallique est vissée manuellement par son extrémité filetée et de diamètre plus réduit et égal à celui de la tige filetée de goupillage dito, dans un manchon taraudé boulonné à ladite tige filetée sans dépasser la face d'extrémité du montant ; ladite douille ainsi vissée jusqu'à ce que son épaulement à la différence de diamètres s'appuie fortement sur le dessus du montant réalise une prolongation supérieure rigide du montant et reçoit l'enfourchement étroit du pied du MS percé à cet effet au même diamètre, cette dernière opération de montage étant particulièrement simple et rapide pour l'usager.

Le problème déjà mentionné de la complexité et du coût de la multiplicité des tenonnages d'extrémité des différentes traverses du mobilier est également résolu dans l'invention par le fait que le montant est d'une section telle que les trois parois latérales du côté des traverses et la paroi avant ont des profils équivalents : plats, convexes ou concaves, et taraudés en leur jonction selon un profil symétrique par rapport au plan diagonal longitudinal de symétrie; ce profil symétrique sera par exemple un quart de rond convexe, ou concave en creux, ou un chanfrein à 45°, ou encore une feuillure de section carrée ; de manière correspondante, les parois des extrémités des traverses, principales ou intermédiaires, auront selon l'invention, une surface concave, identique à celle de la paroi du montant de manière à ce que soit impossible toute rotation lors de leur emboîtement du fait même de leur application serrée contre le montant. Une solution simple est que le montant soit de section carrée avec des angles arrondis en quart de cercle. Une autre solution particulièrement intéressante, selon l'invention, est que le montant ait une section cylindrique, ou comprise dans un cylindre, recevant contre sa paroi l'application latérale et l'emboîtement étroit, positionné ainsi sans aucune rotation possible lors de leur serrage, des extrémités des traverses principales et intermédiaires de paroi cylindrique concave inverse et de même diamètre. En outre les parois d'extrémité de deux traverses adjacentes, principales ou intermédiaires, se rejoignent d'une part sur la paroi du montant suivant la trace verticale du plan à la fois bissecteur à 45° de l'angle des deux traverses orthogonales, et de symétrie longitudinale du montant; cette trace définit ainsi le coin de la tablette en appui sur les feuillures en surépaisseur à la face interne des traverses : les parois d'extrémité desdites traverses adjacentes se rejoignent d'autre part contre la section en biseau à 45° desdites feuillures suivant ledit plan bissecteur. Par voie de conséquence, l'usinage d'extrémité tant des traverses principales que des traverses intermédiaires est en réalité un tenonnage identique, sur tout ou partie de sa hauteur, qui ne nécessite qu'une même et unique molette tranchant suivant une partie cylindrique complétée de deux chanfreins symétriques à 45°- usinage par conséquent économique.

Une conséquence logique, selon l'invention, des caractéristiques précédentes est que les orifices d'introduction des taquets de soutien des tablettes intermédiaires sont alignés précisément suivant le même plan bissecteur de l'angle des tablettes. De plus, les quatre couples d'extrémités adjacentes de 2 TIL et de 2 TIT à même hauteur se maintiennent réciproquement à la fois contre la paroi de chacun des quatre montants d'un module et contre leurs parties biseautées.

Une caractéristique complémentaire de l'invention permet l'emploi de panneaux de côté et de fond d'épaisseur voulue : en prévision de leur place, les faces latérales externes des TIT correspondant à deux travées adjacentes pour un même couple de montants avant et arrière, s'alignent symétriquement de part et d'autre du plan transversal de symétrie du cadre transversal de l'ossature et suivant un écartement 'e' correspondant précisément à la place et à l'épaisseur du panneau de côté.

Comme conséquence de la caractéristique du montant cylindrique et des tenonnages d'extrémités des traverses et selon l'invention, une deuxième TL s'assemble en outre à volonté à angle droit avec la première TL et à même hauteur, et en direction opposée à la TT, contre le même montant percé à cet effet contre sa paroi avant suivant l'axe longitudinal de la douille écrou ; on réalise ainsi un retour en coin ou en épi, de la façade longitudinale du mobilier, ce que la technique antérieure à l'invention ne permettait pas.

Une conception particulière des TIT fait également l'objet de l'invention, en ce sens qu'une TIT spéciale comporte en sous-face de chacune de ses extrémités une feuillure oblique à 45° en double appui, à la fois horizontalement et latéralement contre sa bordure verticale à 45°, sur un taquet de soutien standard ; chaque extrémité se trouve ainsi maintenue entre le taquet et le montant, sans l'épaulement de la TIL ; cette caractéristique permet d'utiliser des TIT seules et en particulier dont la bordure verticale de la feuillure longitudinale supérieure d'appui de la tablette est située dans l'alignement du plan vertical tangeant aux parois de deux montants transversaux, permettant ainsi le passage d'introduction et d'extraction soit d'une tablette soit d'un tiroir, solution non envisagée dans la technique antérieure.

En ce qui concerne la place nécessaire et suffisante prévue par l'invention pour les panneaux de fond et de porte, les parois avant des TIL s'alignent verticalement en retrait de l'alignement vertical avant des TL d'un intervalle (e2) correspondant précisément à la place et l'épaisseur voulue des panneaux de fond et de porte, y compris le débattement du pivotement du chant latéral du vantail.

Une souplesse dans les configurations de montage des modules d'ossature est encore prévue par l'invention en ce sens que l'addition des longueurs d'un MS1 court et d'un MS2 plus long est égale à celle d'un MS3 long, chacune de leurs trois longueurs étant multiple de l'entraxe constant des trous d'introduction des taquets, ceux-ci se trouvant donc toujours deux à deux au même niveau horizontal, aussi bien dans le cas d'un MS3 en regard et à côté d'une superposition MS1 sur MS2 que MS2 sur MS1; cette caractéristique de coordination modulaire résout avantageusement la rigidité et la limitation modulaire de tous les mobiliers modulaires dans l'état actuel de la technique.

Les dernières caractéristiques de l'invention concernent le montage et l'assemblage des panneaux de côté et de fond, également très problématique dans l'état actuel de la technique. A cet effet, les panneaux de côté et de fond sont maintenus en appui sur le dessus des traverses principales au moyen de clips verrous comportant d'une part une extrémité inférieure étroitement introduite dans une rainure plate verticale pratiquée dans l'axe de la paroi d'extrémité concave de chaque TL et TT, et exécutée au cours de la même et unique opération de ténonnage d'extrémité, et d'autre part une partie supérieure à deux côtés enserrant étroitement les deux faces du panneau de côté ou de fond. Un intérêt particulier de ce procédé selon l'invention est qu'un panneau de côté ou de fond d'épaisseur légèrement inférieur à la rainure pratiquée en sous-face des TL et TT, par exemple et en particulier un panneau en glace claire est très simplement mis en place comme suit : sa bordure haute est soulevée et engagée sous et à l'intérieur de ladite rainure, puis abaissée dans un second temps précisément dans lesdits clips préalablement placés dans leur position utile comme on vient de le décrire, la partie supérieure du clip reposant sur le dessus de la traverse d'appui. On obtient ainsi un montage pour tous les mobiliers de vitrines à la fois simple, efficace et de fabrication économique, et que la technique antérieure ne permettait pas.

Un mode privilégié de réalisation du clip consiste à plier un fil en acier ressort selon un demi cercle destiné à être enfoncé dans ladite rainure plate, et dont chaque côté se prolonge et est recourbé également en demi cercle, de manière à constituer chacun une des deux parties parallèles destinées à enserrer la tranche du panneau en appui sur la traverse.

En dernier lieu et selon l'invention, les panneaux de côté et de fond d'épaisseur supérieure à la rainure longitudinale en sous-face des traverses principales, de manière à garantir au panneau une rigidité planaire suffisante, sont maintenus sous lesdites traverses par l'intermédiaire de clips cavaliers en U en acier ressort enfourchés d'une part sur le chant supérieur du panneau et comportant d'autre part une protubérance étroitement introduite en position d'assemblage sous et dans ladite rainure et assurant la maintien transversal du panneau.

La succession des phases d'assemblage et de montage compatibles selon l'invention constitue une suite cohérente n'existant dans aucun des systèmes de mobilier en kit connus dans l'état antérieur de la technique.

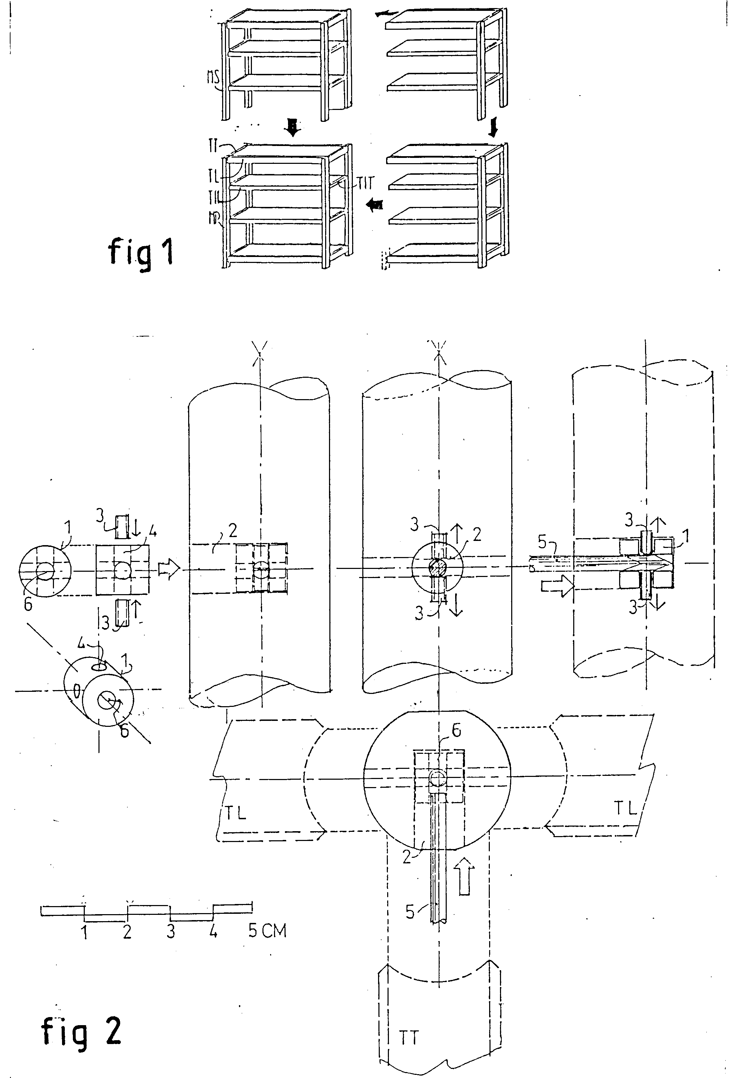

La figure 1 représente un module de base de l'ossature primaire avec montants, traverses principales et intermédiaires, montrant la superposition et les adjonctions latérales respectivement d'un module supplémentaire.

La figure 2 représente l'introduction et le goupillage de la douille écrou dans le montant à toute hauteur désirée.

La figure 3 représente le goupillage de la douille écrou à proximité de l'extrémité supérieure du montant ainsi que l'assemblage du pied du montant supérieur.

La figure 4 représente l'emboîtement étroit des diverses traverses contre la paroi cylindrique du montant, ainsi que le principe des orifices dans les montants recevant les taquets de soutien des tablettes intermédiaires.

La figure 5 représente le retour en épi ou en angle de la façade du mobilier.

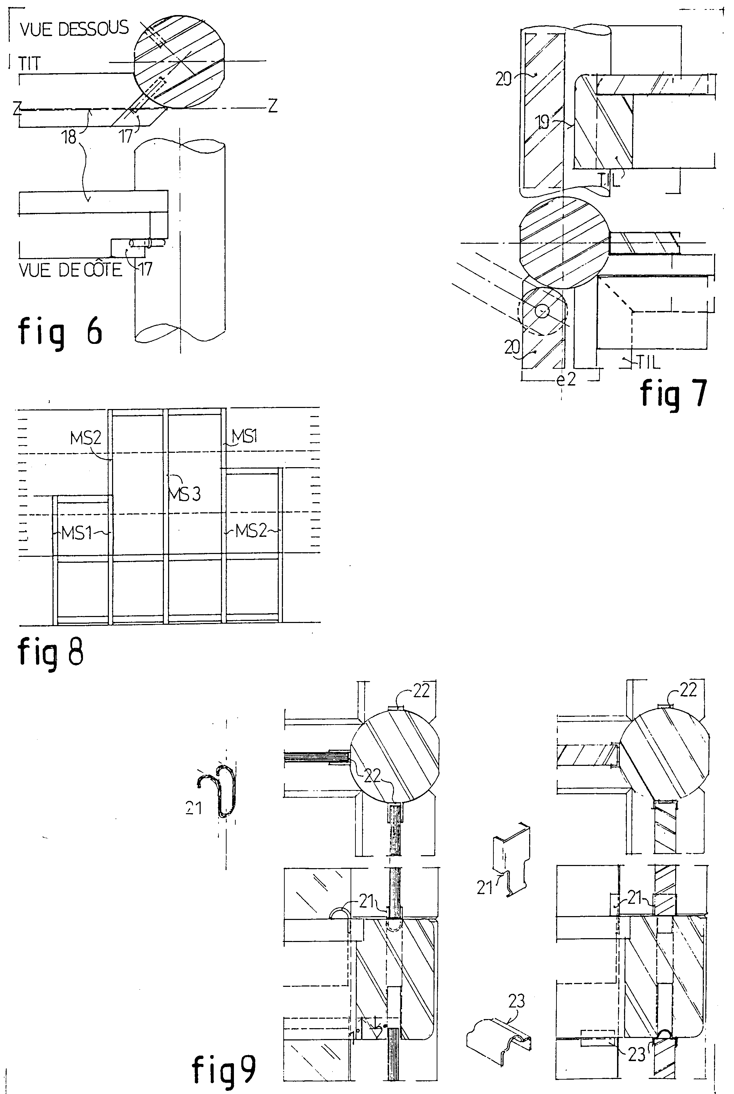

La figure 6 représente une TIT spéciale et utilisée sans TIL et supportant tablette ou tiroir.

La figure 7 représente l'emplacement des panneaux de fond ou de portes en rapport avec l'alignement en retrait des façades des TIL.

La figure 8 représente le principe de coordination modulaire entre les trois longueurs des montants supérieurs.

La figure 9 représente les divers clips de maintien des panneaux de côtés et de fond d'une part d'épaisseur inférieure à la rainure en sous-face des traverses principales et d'autre part d'épaisseur sensiblement supérieure.

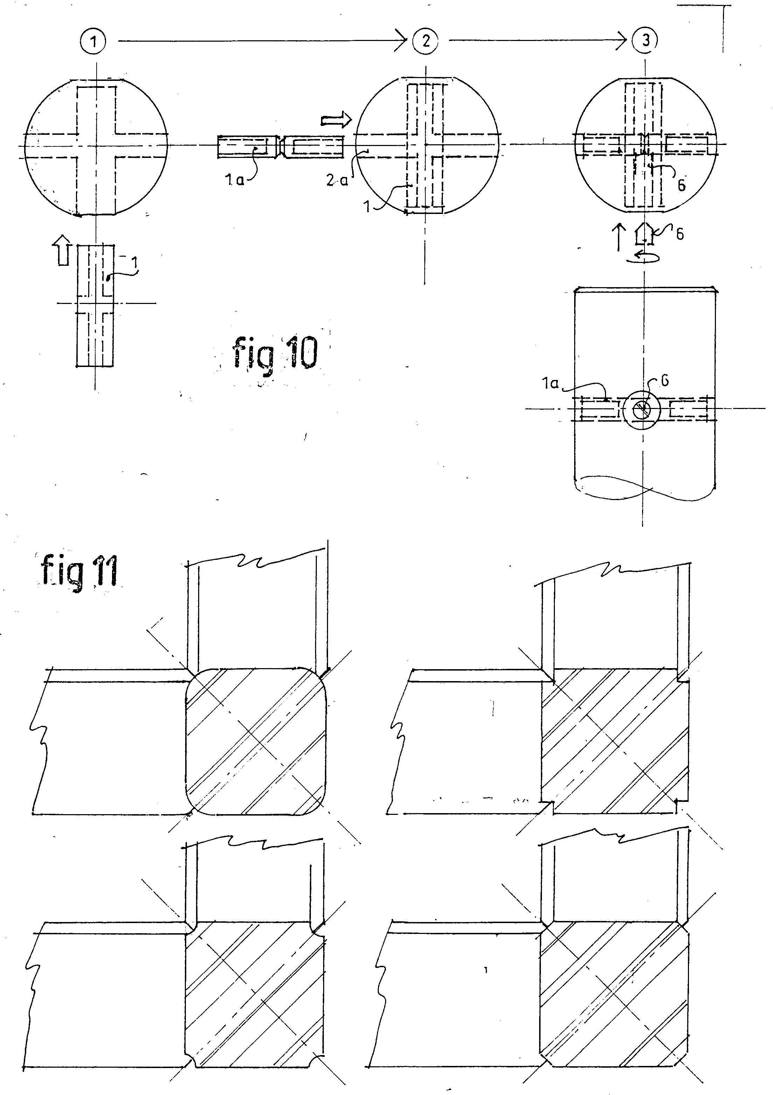

La figure 10 représente le premier mode de réalisation de l'invention : le mode d'introduction de la douille maintenue dans le corps du montant ainsi que son verrouillage transversal par une goupille dont les extrémités sont taraudées aux diamètre et pas de la vis de rappel, puis maintenue ainsi par le vissage d'une vis pointeau dans le taraudage de ladite douille écrou.

La figure 11 représente les différents profils convexes des montants correspondants aux parois concaves des extrémités des traverses maintenues en appui sans possibilité de rotation.

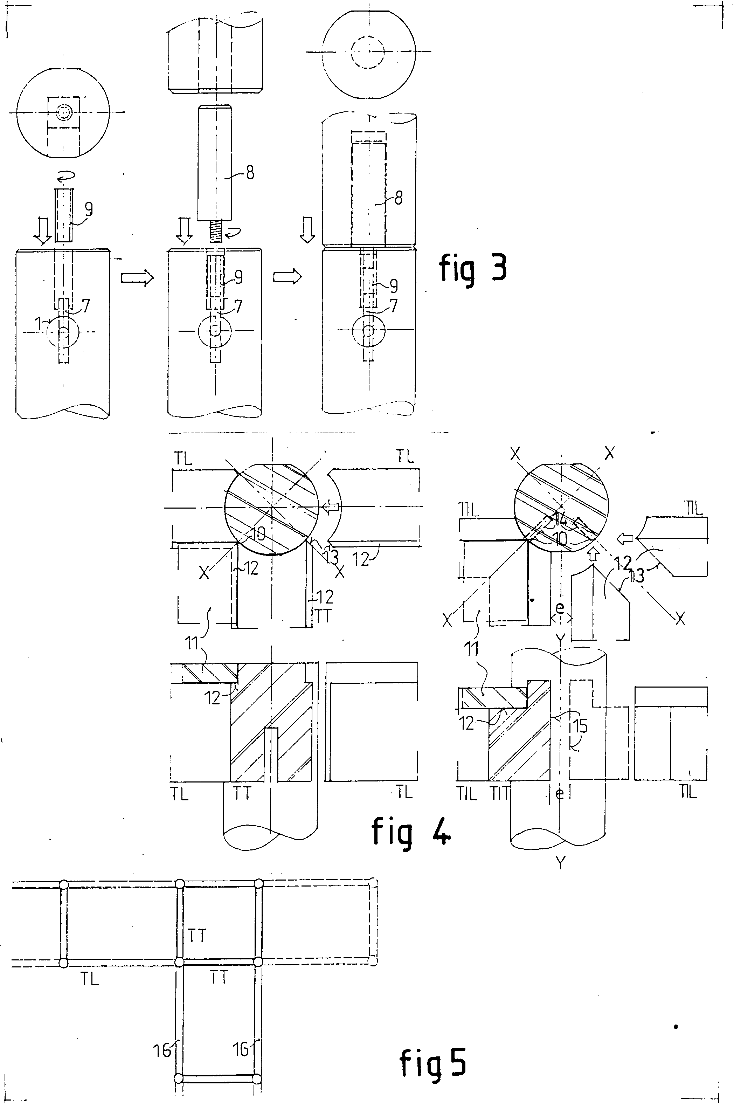

Un mode de réalisation de l'invention illustré par la figure 3 fera bien comprendre le montage de la douille écrou, son verrouillage, la prolongation du MP au moyen d'une douille permettant l'assemblage simple du pied du MS : la douille écrou (1) est étroitement introduite dans un orifice de même diamètre percé à la face intérieure du montant, à proximité de son extrémité supérieure. Elle est goupillée à la fabrication par une tige filetée (7) introduite à travers un perçage longitudinal étroit débouchant en bout du montant, puis vissée à travers la douille écrou dans son taraudage transversal vertical et débouchant de part et d'autre de manière à assurer son ancrage dans le montage lors de la traction exercée par l'assemblage de rappel de l'extrémité de la TT. Ledit perçage en bout du montant est suffisamment profond pour descendre au delà de la paroi de la douille écrou :il comprend deux diamètres étagés correspondant d'une part à ladite tige filetée (7) et d'autre part au diamètre légèrement supérieur du manchon (9) vissé à la fabrication sur la tige filetée (7), sans dépasser la face d'about du montant. Afin d'assembler le pied du montant supérieur, une douille métallique (8) est vissée manuellement, jusqu'à son application bloquée sur le dessus du montant, par son extrémité filetée de diamètre plus réduit et égal à celui de la tige filetée (7); cette douille (8) réalise donc bien une prolongation rigide du montant inférieur et reçoit lors de l'opération de montage manuel par l'usager, l'enfourchement étroit du pied du montant supérieur percé à cet effet au même diamètre que la douille (8).

Le mobilier suivant l'invention couvre tous les programmes d'ameublement modulaires en pièces détachées, avec parois ouvertes ou fermées à volonté par l'usager, et l'encombrement minimal tant pour leur stockage que leur transport.

## Revendications

**1/** Mobilier en kit et ses dispositifs d'assemblage et de montage comprenant :
1° - une ossature primaire, à base de modules parallélépipédiques, agrandissable à volonté en hauteur et latéralement, composée d'une pluralité de montants (M) et de traverses principales longitudinales (TL) et transversales (TT), de préférence en bois, le pied de chaque montant supérieur (MS) étant d'une part assemblé à volonté sur le dessus du montant inférieur et, d'autre part, chaque extrémité des traverses étant serrée en appui contre la paroi latérale du montant correspondant au moyen d'une vis de rappel, maintenue en tête de l'extrémité de la traverse par l'intermédiaire d'une douille spéciale, et vissée dans une douille métallique écrou maintenue à l'intérieur du montant et taraudée selon deux directions orthogonales transversales et coaxiales aux vis de rappel,
2° - des traverses intermédiaires longitudinales (TIL) et transversales (TIT) posées à même hauteur voulue sur des taquets amovibles enfoncés dans des orifices percés dans les parois des montants,
3° - des panneaux minces, horizontaux d'une part et posés en tablettes sur les bords intérieurs, feuillurés à cet effet, des cadres horizontaux des traverses, verticaux d'autre part et placés et maintenus dans les cadres de côté et de fond de l'ossature primaire, **caractérisé** par le fait que la douille écrou (1) est introduite étroitement et par simple enfoncement dans un orifice (2) de même diamètre percé à toute hauteur désirée contre la paroi du montant du côté de l'assemblage de la TT et maintenue définitivement en cette position lors de la fabrication par un goupillage interne transversal à la douille .

**2/** Mobilier en kit selon la revendication 1 caractérisé par le fait que le goupillage est une goupille cylindrique (1a), étroitement introduite dans le sens horizontal transversal au montant, à la fois par le perçage (2a) transversal au dit montant, nécessaire à l'accessibilité à la vis de rappel, et par le perçage transversal à la douille écrou (1), puis percée et taraudée à chacune de ses extrémités au diamètre et au pas de la vis de rappel d'assemblage des TL, puis ainsi maintenue dans la douille écrou par le vissage d'une vis pointeau (6) courte dans le taraudage longitudinal de la douille écrou jusqu'au blocage de la tête pointeau en appui dans une gorge annulaire en V usinée par décolletage dans le plan de symétrie transversal de ladite goupille (1a).

**3/** Mobilier en kit selon la revendication 1 caractérisé par le fait que le goupillage est obtenu par deux goupilles (3) de longueur chacune égale à la moitié du diamètre de la douille écrou, introduites dans un orifice (4) transversal à celle-ci avant son introduction dans le montant, puis chassées latéralement sous l'effet de coin d'une tige métallique (5) à tête biseautée ou d'une vis pointeau introduite dans le taraudage longitudinal (6) de la douille écrou, l'enfoncement d'ancrage interne de chaque goupille à l'extérieur de la douille et dont le montant étant égal à la moitié du diamètre de l'orifice d'introduction du coin.

**4/** Mobilier en kit selon la revendication 1 caractérisé par le fait que le goupillage d'une douille (1) à proximité d'une de ses extrémités du montant est une tige filetée (7) introduite dans le sens longitudinal du montant, à travers un perçage longitudinal débouchant en bout du montant puis vissée dans la douille écrou.

**5/** Mobilier en kit selon la revendication 4 caractérisé par le fait qu'une douille métallique (8) est vissée manuellement, jusqu'à son application bloquée sur le dessus du montant, par son extrémité filetée de diamètre puis réduit et égal à celui de la tige filetée (7), celle-ci étant prolongée à la fabrication par le boulonnage d'un manchon (9) taraudé sans dépasser la face d'extrémité du montant, ladite douille réalisant une prolongation rigide supérieure du montant et recevant l'enfourchement étroit du pied du MS percé à cet effet au même diamètre.

**6/** Mobilier en kit selon l'une des revendications précédentes caractérisé par le fait que le montant a ses parois latérales arrière et éventuellement avant de profils équivalents, par exemple plats, et raccordés selon un profil symétrique par rapport au plan diagonal longitudinal de symétrie X-X, par exemple ¼ de rond, convexe en creux, ou en chanfrein à 45°, et reçoit en application latérale l'emboîtement étroit, positionné ainsi sans rotation lors de leur serrage, de la paroi d'extrémité des traverses, principales et intermédiaires, de surface concave identique à celle de la paroi dito du montant.

**7/** Mobilier en kit selon la revendication précédente caractérisé par le fait que le montant est de section cylindrique, les extrémités des traverses principales et intermédiaires de paroi cylindrique concave de même diamètre.

**8/** Mobilier en kit selon chacune des revendications 6 et 7 caractérisé par le fait que les parois d'extrémité de deux traverses adjacentes et orthogonales se rejoignent d'une part sur le montant suivant la trace verticale (10) du plan X-X à la fois bissecteur à 45° de l'angle des traverses et de symétrie longitudinale du montant, trace définissant le coin de la tablette (11) en appui sur les feuillures (12) en surépaisseur à la face interne des traverses, et d'autre part contre la section en biseau (13) à 45° de ces feuillures suivant ledit plan bissecteur X-X.

**9/** Mobilier en kit selon chacune des revendications 6 à 8 caractérisé par le fait que l'usinage d'extrémité des traverses principales et intermédiaires est un tenonnage identique, sur toute ou partie de son épaisseur, au moyen d'une même et unique molette tranchant suivant une paroi de surface concave constante complétée de deux chanfreins symétriques à 45°.

**10/** Mobilier en kit selon la revendication 8 caractérisé par le fait que les orifices (14) dans le montant d'introduction des taquets de soutien des tablettes intermédiaires sont alignés suivant chaque plan bissecteur X-X de l'angle des tablettes.

**11/** Mobilier en kit selon la revendication 8 caractérisé par le fait que les quatre couples d'extrémités adjacentes de 2 TIL et 2 TIT à même hauteur se maintiennent réciproquement à la fois contre la paroi de chacun des quatre montants d'un module et contre leurs parties biseautées (13).

**12/** Mobilier en kit selon la revendication 8 caractérisé par le fait que les faces latérales externes (15) des TIT correspondant à deux travées adjacentes pour un même couple de montants, s'alignent verticalement et symétriquement de part et d'autre du plan transversal de symétrie Y-Y, suivant un écartement (e) correspondant à la place et à l'épaisseur du panneau de côté.

**13/** Mobilier en kit selon l'une des revendications 6 à 10 caractérisé par le fait qu'une deuxième TL (16) s'assemble à angle droit et à même hauteur que la première TL, et en direction opposée à la TT, contre le même montant percé à cet effet contre sa paroi avant suivant l'axe longitudinal de la douille écrou, réalisant ainsi un retour en coin ou en épi de la façade longitudinale du mobilier.

**14/** Mobilier en kit selon chacune des revendications 7,10 et 11 caractérisé par le fait qu'une TIT spéciale comporte en sous-face de chacune de ses extrémités une feuillure (17) oblique à 45° en appui sur un taquet de soutien, à la fois horizontalement et latéralement contre sa bordure verticale à 45°, chaque extrémité se trouvant ainsi maintenue entre le taquet et le montant, sans l'épaulement de la TIL.

**15/** Mobilier en kit selon la revendication précédente caractérisé par le fait que la bordure verticale (18) de la feuillure longitudinale supérieure d'appui de la tablette est située dans l'alignement du plan transversal tangeant (Z-Z) aux parois de deux montants transversaux correspondant au passage d'introduction et d'extraction d'un tiroir ou d'une tablette.

**16/** Mobilier en kit selon chacune des revendications 6 à 13 caractérisé par le fait que les parois avant (19) des TIL s'alignent verticalement en retrait de l'alignement vertical avant des TL d'un intervalle (e2) recevant à volonté des panneaux de fond ou de porte (20) y compris le débattement du pivotement du chant latéral du vantail.

**17/** Mobilier en kit selon l'une quelconque des revendications précédentes caractérisé par le fait que l'addition des longueurs d'un MS1 court et d'un MS2 plus long égale celle d'un MS3 long, leurs trois longueurs étant chacune multiple de l'entraxe constant des trous d'introduction des taquets, ceux-ci se trouvant donc deux à deux toujours au même niveau aussi bien dans les cas d'un MS3 en regard d'une superposition MS1 sur MS2 que MS2 sur MS1.

**18/** Mobilier en kit selon chacune des revendications précédentes caractérisé par le fait que les panneaux de côté ou de fond sont maintenus en appui sur le dessus des traverses principales au moyen de clips verrous (21) comportant d'une part une extrémité inférieure plate étroitement introduite dans une rainure plate (22) verticale pratiquée dans l'axe de la paroi d'extrémité concave de chaque traverse et usinée au cours de la même opération de tenonnage, et d'autre part d'une partie supérieure à deux côtés enserrant les deux faces du panneau.

**19/** Mobilier en kit selon la revendication précédente caractérisé par le fait que les panneaux d'épaisseur supérieure à la rainure longitudinale en sous-face des traverses principales sont maintenues par l'intermédiaire de clips (23) enfourchés sur le chant supérieur du panneau et comportant une protubérance étroitement introduite sous ladite rainure. d'une partie supérieure à deux côtés enserrant les deux faces du panneau.
